**Europäisches Patentamt**

**European Patent Office**

**Office européen des brevets**

(19)

(11) Veröffentlichungsnummer: **0 198 130**
**A2**

# EUROPÄISCHE PATENTANMELDUNG

(12)

(21) Anmeldenummer: **85201801.9**

(22) Anmeldetag: **06.11.85**

(51) Int. Cl.⁴: **C08G 8/10** , **C08G 8/28** , **B32B 27/42**

(30) Priorität: **08.02.85 DE 3504340**

(43) Veröffentlichungstag der Anmeldung:
**22.10.86 Patentblatt 86/43**

(84) Benannte Vertragsstaaten:
**AT BE CH DE FR GB IT LI LU NL SE**

(71) Anmelder: **Rütgerswerke Aktiengesellschaft**
**Mainzer Landstrasse 217**
**D-6000 Frankfurt a.Main 1(DE)**

(72) Erfinder: **Jellinek, Karl, Dr.**
**Mörikeweg 1**
**D-5860 Iserlohn-Letmathe(DE)**
Erfinder: **Müller, Rolf, Dr.**
**Margarethenstrasse 49**
**D-4100 Duisburg 17(DE)**
Erfinder: **Wisomirski, Gerhard**
**Borkhofer Strasse 6**
**D-4100 Duisburg 12(DE)**

(54) **Phenolharz-Bindemittel und seine Herstellung und Verwendung.**

(57) Die Erfindung betrifft ein neues Phenolharz-Bindemittel, bei dem in einem mit Calciumhydroxid als Katalysator kondensierten Phenolharz die Calciumionen in einem bestimmten pH-Bereich und mittels Sulfationen komplex an das Harz gebunden sind.

EP 0 198 130 A2

## Phenolharz-Bindemittel und seine Herstellung und Verwendung.

Die Erfindung betrifft ein neues Phenolharz-Bindemittel auf der Basis eines mit Calciumhydroxid als Katalysator hergestellten Phenolharzes.

Für verschiedene Anwendungsgebiete werden aus Gründen der besseren Feuchtigkeitsbeständigkeit als Katalysatoren für die Kondensation der Phenolharze Erdalkalihydroxide, vor allem Calciumhydroxid, eingesetzt. Diese haben gegenüber Alkalihydroxiden den Vorteil, daß sie nach Beendigung der Kondensation durch Zusatz von verdünnter Schwefelsäure, von Kohlendioxid, Ammoniumsulfat, Ammoniumphosphaten oder Ammoniumcarbonaten gefällt und in Form wasserunlöslicher Salze (z.B. Calciumcarbonat, Calciumphosphat oder Calciumsulfat) aus der wässrigen Lösung abgetrennt werden können. Mit dieser Verfahrensweise werden Harze erhalten, die nahezu aschefrei sind. Die damit hergestellten Produkte sind von ausgezeichneter Feuchtigkeitsbeständigkeit, insbesondere wenn dem Harz noch geringe Mengen Aminosilan-Haftmittel (z.B. 0,05 %, bezogen auf Trockenharz) zugefügt werden.

Ein schwerwiegender Nachteil bei der Herstellung dieser Bindemittel ist jedoch die Tatsache, daß unlösliche Niederschläge anfallen, die in einem aufwendigen Prozeß abfiltriert werden müssen, da andernfalls bei der Verarbeitung des Harzes durch Versprühen mit Verstopfung von Düsen zu rechnen ist. Die Filtrierung des Harzes ist mit erheblichen Verlusten an Harz verbunden. Außerdem ist die Deponierung des phenolharzhaltigen Filterkuchens teuer und stellt heutzutage ein schwieriges Umweltproblem dar.

Es ist daher Aufgabe der Erfindung, ein Bindemittel bereitzustellen, das bei ebenfalls ausgezeichneter Feuchtigkeitsbeständigkeit, diese Nachteile in der Herstellung nicht mehr zeigt.

Die Aufgabe wird gelöst durch Phenolharz-Bindemittel gemäß Anspruch 1 und durch die Verfahren zu seiner Herstellung gemäß der Ansprüche 2 bis 9. Die Bindemittel eignen sich zur Herstellung von Laminaten, insbesondere zur Herstellung von Schichtstoffplatten aus imprägniertem Papier.

Zur Herstellung der erfindungsgemäßen Phenolharz-Bindemittel geht man von einem wässrigen Phenolharz aus, das mit Calciumhydroxid als Katalysator kondensiert wurde. Diesem Ausgangspunkt wird zunächst eine Base in einer Menge zugesetzt, daß ein pH-Wert von 7,5 bis 11, vorzugsweise von 8,5 bis 10,5, resultiert. Anschließend werden langsam so viele Sulfationen eingebracht, daß sich ein 0,8 bis 2,0-faches stöchiometrisches Verhältnis der Sulfationen zu den Calciumionen des Katalysators einstellt. Dies kann mittels Schwefelsäure oder bevorzugt auch durch Ammoniumsulfat-Zusatz erfolgen. Durch gleichzeitige Zugabe von weiterer Base ist darauf zu achten, daß der pH-Bereich in den oben angegebenen Grenzen verbleibt. Dabei bildet sich überraschenderweise kein Niederschlag von Calciumsulfat, sondern die Harzlösung bleibt weitgehend klar und verändert sich je nach Zusammensetzung während einiger Stunden bis mehrerer Tage nicht und kann deshalb innerhalb dieser Zeitspanne verarbeitet werden, gegebenenfalls nach vorheriger Verdünnung mit Wasser und nach Zusatz von Aminosilan als haftverbesserndem Mittel.

Die Verhinderung des Niederschlags von Calciumsulfat ist wahrscheinlich auf die Bildung eines relativ stabilen metallorganischen Komplexes der Calciumionen mit den Ein-und Mehrkernphenolen bzw. deren Methylol-Verbindungen zurückzuführen. Dies wird besonders deutlich, wenn man die Harzlösung eindampft und das Harz in Form eines dünnen Filmes aushärtet. Es entsteht ein klarer, durchsichtiger, hellgelber Firm, der keinerlei Trübung durch ausgeschiedenes Calciumsulfat aufweist. Der organische Katalysatoranteil ist demnach Bestandteil der Bindemittel-Moleküle geworden und erhöht entsprechend die Harzausbeute. Hierzu wird ohne zusätzlichen Kostenaufwand die Ergiebigkeit des Harzes gesteigert und dadurch auch eine deutliche Erhöhung des Bindemittelanteils erreicht. Die Steigerung des nutzbaren Harzgehaltes beträgt je nach eingesetzter Katalysatormenge zwischen 1 und 5 % im Vergleich zu herkömmlichen feuchtigkeitsbeständigen Bindemitteln, bei denen der Katalysator vor der Verwendung durch Fällen und Filtrieren entfernt worden ist.

Das der Erfindung zugrunde liegende Phenolharz wird aus Phenol und Formaldehyd im molekularen Verhältnis von 1 : 4,0 in wässriger Lösung kondensiert. Als Kondensationskatalysator dient Calciumhydroxid, das hierzu in einer Menge von 0,5 bis 10,0 Gewichtsteilen, bezogen auf die eingesetzte Phenolmenge, angewendet wird.

Durch Modifizierung des Phenolharzes mit Harnstoff wird die Feuchtigkeitsbeständigkeit zwar beeinträchtigt; sie entspricht aber in den meisten Anwendungsfällen immer noch den Erfordernissen der Praxis, sofern die Harzstoffmenge 100 Gewichtsteile, bezogen auf 100 Gewichtsteile des eingesetzen Phenols, nicht übersteigt.

Als Basen im erfindungsgemäßen Verfahren können Ammoniak und alle basischen organischen Verbindungen eingesetzt werden. Beispiele für diese organischen Basen sind Methyl-, Äthyl-, Propyl-, Butyl-, Dimethyl-, Trimethyl-, Diäthyl-, Triäthyl-, Äthanol-, Diäthanol-oder Triäthanolamin.

Der Einsatz von Alkalihydroxiden ist zwar prinzipiell möglich, aber insofern nicht empfehlenswert, als dadurch die Feuchtigkeitsbeständigkeit der Faserprodukte reduziert wird. Die bevorzugte Base ist Ammoniak in Form von Gas oder der wäßrigen Lösung.

Durch Zugabe von Ammoniak zu der wässrigen Harzlösung wird nicht nur der Restgehalt des Harzes an freiem Formaldehyd unter Bildung von Hexamethylentetramin gebunden, sondern die Wasserverdünnbarkeit und damit auch die Imprägnierfähigkeit und die Lagerfähigkeit des Harzes werden dadurch im allgemeinen verbessert. Am günstigsten ist es in dieser Hinsicht, die Harzlösung auf einen pH-Bereich von 7,5 bis 11,0, vorzugsweise 8,5 bis 10,5 einzustellen.

Zur Umwandlung des im Harz enthaltenen Calciumhydroxids in chelatisiertes Calciumsulfat wird nach diesem Verfahren Ammoniumsulfat bevorzugt. Die für die Umwandlung erforderlichen Sulfationen können aber auf andere Weise eingebracht werden, so durch Zugabe von Ammoniumhydrogensulfat oder von verdünnter Schwefelsäure zu der mit Ammoniak verdünnten Harzlösung. In jedem Fall soll annähernd die Menge Sulfationen zugesetzt werden, die zur Bindung der in der Bindemittellösung vorhandenen Calciumionen stöchiometrisch erforderlich ist. Die Abweichung von der stöchiometrischen Menge soll nicht mehr als 100 % nach oben oder 20 % nach unten betragen.

Beispiel:

100 g Phenol werden mit 212,8 g einer 45 %igen wässrigen Formalin-Lösung und 5 g Calciumhydroxid vermischt und so lange bei 60 °C gehalten, bis eine auf 20°C abgekühlte Probe beim Verdünnen mit destilliertem Wasser im Verhältnis 1 : 5 noch klar bleibt, im Verhältnis 1 : 10 aber trübe wird. Anschließend kühlt man den Ansatz auf eine Temperatur von 10 bis 20 °C ab und fügt danach 25%ige Ammoniak-Lösung zu, bis die Harzlösung einen pH-Wert von 9,8 aufweist. Danach werden der Lösung 35,7 g einer 25%igen wässrigen Lösung von Ammoniumsulfat zugefügt und die Lösung wird mit Wasser auf einen Trockenharzgehalt von 40 % verdünnt. Diese Lösung wird innerhalb von 5 h zur Herstellung von harzgetränkten Schichtstoffplatten aus Papier weiterverarbeitet.

## Ansprüche

1. Mit Calciumhydroxid als Katalysator kondensiertes Phenolharz-Bindemittel, **dadurch gekennzeichnet**, daß die Calciumionen komplex an das Harz gebunden sind.

2. Verfahren zur Herstellung des Bindemittels nach Anspruch 1, **dadurch gekennzeichnet**, daß dessen Calciumionen nach der Kondensationsreaktion durch Zugabe einer Base in einer Menge, daß der pH-Wert im Bereich von 7,5 bis 11 eingehalten wird und Sulfationen in 0.8 bis 2.0 der stöchiometrischen Menge -bezogen auf die Calciumionen -in einen wasserlöslichen Komplex übergeführt werden, der mindestens 3 Stunden ohne jegliche Ausfällung beständig bleibt.

3. Verfahren nach Anspruch 2, **dadurch gekennzeichnet** , daß das molare Verhältnis von Phenol zu Formaldehyd des wässrigen Phenol-Formaldehyd-Harzes 1 : 1,3 bis 1 : 4,0 beträgt.

4. Verfahren nach Anspruch 2 und 3, **dadurch gekennzeichnet**, daß als Kondensationskatalysator für das wasserlösliche Phenol-Formaldehyd-Harz 0,5 bis 10,0 % Calciumhydroxid, berechnet auf den Phenol-Einsatz, verwendet werden.

5. Verfahren nach Anspruch 2 bis 4, **dadurch gekennzeichnet**, daß das mit Calciumhydroxid kondensierte wässrige Phenol-Formaldehyd-Harz durch Zusatz von Harnstoff weiter modifiziert wird, und zwar in einer Menge bis zu 100 Gewichtsteilen Harnstoff, bezogen auf 100 Gewichtsteile eingesetztes Phenol.

6. Verfahren nach Anspruch 2 bis 5, **dadurch gekennzeichnet**, daß dem beanspruchten Bindemittelgemisch Base in einer Menge zugefügt wird, daß der resultierende pH-Bereich 8,5 bis 10,5 beträgt.

7. Verfahren nach Anspruch 2 bis 6, **dadurch gekennzeichnet**, daß die Base Ammoniak verwendet wird.

8. Verfahren nach Anspruch 2 bis 7, **dadurch gekennzeichnet**, daß die Sulfationen bevorzugt in Form von Ammoniumsulfat in das Bindemittelgemisch eingebracht werden.

9. Verfahren nach Anspruch 2 bis 8, **dadurch gekennzeichnet**, daß die Sulfationen in einer Menge von 80 bis 120 %, bezogen auf die stöchiometrisch zur Bildung der in dem Bindemittelgemisch vorhandenen Calciumionen erfoderliche Sulfatmenge, zugefügt werden.

10. Verwendung des Bindemittels nach Anspruch 1 zur Herstellung von Laminaten.